# EUROPEAN PATENT APPLICATION

(11) **EP 4 604 196 A1**
(43) Date of publication of application: **20.08.2025**
(21) Application number: 25157132.9
(22) Date of filing: 11.02.2025
(51) Int. Cl.: H01M 4/131, H01M 4/136, H01M 4/36, H01M 4/525, H01M 4/58

(54) **RECHARGEABLE LITHIUM BATTERY**

(30) Priority: 13.02.2024 KR 20240020386
(71) Applicant: SAMSUNG SDI CO., LTD., Yongin-si, Gyeonggi-do 17084 (KR)
(72) Inventor: KIM, Jun Sik, 16678 Gyeonggi-do (KR); LEE, Hyo Suk, 16678 Gyeonggi-do (KR); KIM, Won Seok, 16678 Gyeonggi-do (KR)
(74) Representative: Michalski Hüttermann & Partner Patentanwälte mbB

(57) **Abstract**

A rechargeable lithium battery for a full charge voltage of 5 V or more is disclosed. The rechargeable lithium battery includes a positive electrode and a negative electrode opposite the positive electrode, wherein the positive electrode includes a current collector, and a positive electrode material layer on at least one surface of the current collector. The positive electrode material layer includes a positive electrode material containing a mixture of a lithium cobalt oxide and a lithium manganese phosphate, and the lithium manganese phosphate is present in an amount of ≥ 1 wt% to ≤ 5 wt% in the positive electrode material layer.

## Description

### Cross-Reference to Related Application

The present application claims the benefit of priority to Korean Patent Application No. 10-2024-0020386, filed on February 13, 2024 in the Korean Intellectual Property Office, the entire disclosure of which is incorporated herein by reference.

### Field of the Disclosure

Examples of the present disclosure relate to rechargeable lithium batteries.

### Description of the Related Art

In recent years, demand for high energy density and high capacity secondary batteries has grown with the increase of electronic devices using batteries, such, e.g., as mobile phones, notebook computers, electric vehicles, and the like. Thus, improving performance of rechargeable lithium batteries may be advantageous.

A rechargeable lithium battery includes a positive electrode and a negative electrode, and the electrodes contain active materials allowing intercalation and deintercalation of lithium ions, and an electrolyte. The rechargeable lithium battery produces electricity through oxidation and reduction upon intercalation/deintercalation of the lithium ions at the positive electrode and the negative electrode.

High-voltage positive electrodes that exhibit a full charge voltage of 4.5 V or more have been developed. It is desirable for such high-voltage positive electrodes to exhibit thermal safety when exposed to heat while maintaining high energy density.

### Summary of the Disclosure

Examples of the present disclosure include a rechargeable lithium battery with improved thermal safety while providing high energy density at a high full charge voltage of 4.5 V or more.

In accordance with one aspect of the present disclosure, a rechargeable lithium battery for a full charge voltage of 4.5 V or more includes a positive electrode and a negative electrode opposite the positive electrode, the positive electrode including a current collector and a positive electrode material layer formed on at least one surface of the current collector. The positive electrode material layer includes a positive electrode material containing a mixture of a lithium cobalt oxide and a lithium manganese phosphate, and the lithium manganese phosphate is present in an amount of ≥ 1 wt% to ≤ 5 wt% in the positive electrode material layer.

Example embodiments of the present disclosure include rechargeable lithium batteries that exhibit improved thermal safety while providing high energy density at a high full charge voltage of 4.5 V or more.

### Brief Description of the Drawings

FIG. 1 is a conceptual diagram of a positive electrode, according to one example embodiment of the present disclosure.
FIG. 2 is a conceptual diagram of a positive electrode, according to another example embodiment of the present disclosure.
FIG. 3 is a conceptual diagram of a positive electrode, according to a further example embodiment of the present disclosure.
FIG. 4 to FIG. 7 are schematic cross-sectional views of rechargeable lithium batteries, according to example embodiments of the present disclosure.
FIG. 8 is a graph depicting capacity-dependent discharge voltage curves in operation of cells prepared in Examples and Comparative examples.
FIG. 9 is an enlarged view of region A (3.8 V discharge voltage region) of FIG 8.
FIG. 10 is an enlarged view of region B (3.2 V discharge voltage region) of FIG. 8.

### Detailed Description

Hereinafter, example embodiments of the present disclosure are described in detail with reference to the accompanying drawings. It should be understood that the following example embodiments are provided by way of illustration, and the present disclosure is not limited thereto and is defined only by the appended claims and equivalents thereto.

When an arbitrary element is referred to as being disposed (or formed or positioned) "above" (or "below") or "on" (or "under") a component, it may mean that the arbitrary element is placed in contact with the upper (or lower) surface of the component, and it may also mean that another component may be interposed between the component and any arbitrary element disposed (or formed or positioned) on (or under) the component.

Throughout the specification, unless specified otherwise, each element may be singular or plural. In addition, throughout the specification, when "A and/or B" is stated, it means A, B or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative distribution of corresponding particles. The average particle diameter may be measured by any method known in the art by, for example, a particle diameter analyzer, a transmission electron microscope image or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. For example, in measurement by laser diffraction, target particles are dispersed in a dispersant, introduced into a commercially available laser diffraction particle analyzer (for example, Microtrac MT 3000), and irradiated with ultrasound waves of 28 kHz at a power of 60 W, followed by calculating the average particle diameter (D50) corresponding to 50 vol% by volume in the cumulative volume distribution of the particles in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

A rechargeable lithium battery according to one example embodiment is applied to high voltage applications with a full charge voltage of ≥ 4.5 V or more, for example 4.5 V to 4.7 V.

The rechargeable lithium battery according to the example embodiment includes a positive electrode, and a negative electrode opposite the positive electrode, the positive electrode including a current collector and a positive electrode material layer formed on at least one surface of the current collector. The positive electrode material layer includes a positive electrode material containing a mixture of a lithium cobalt oxide and a lithium manganese phosphate, and the lithium manganese phosphate is present in an amount of ≥ 1 wt% to ≤ 5 wt% in the positive electrode material layer.

The positive electrode material layer includes a lithium cobalt oxide as the positive electrode material. The lithium cobalt oxide has high energy density and can be included as a positive electrode material for high voltage with a full charge voltage of ≥ 4.5 V or more.

The lithium cobalt oxide may be represented by Formula 1 below:

Li_{α}Co_{1-β}M_{β}O₂, Formula 1

In Formula 1, α and β satisfy: 0.9 ≤ α ≤ 1.2 and 0 ≤ β < 0.1, and

M denotes or includes at least one metal or transition metal element with an oxidation number of +2 or +3 excluding cobalt.

In one example embodiment, M may denote or include at least one element such as or including at least one of Al, Mg, Mn, Ni, Fe, Cr, V, Ti, Cu, B, Ca, Zn, Zr, Nb, Mo, Sr, Sb, W, and Bi. For example, M may denote or include at least one element such as or including at least one of Al, Mg, and Mn. For example, M may denote or include Al and Mg, or Al and Mn.

In one example embodiment, the lithium cobalt oxide may be or include Li_{α}CoO₂ (where α is as defined in Formula 1 above), for example, LiCoO₂.

According to one example embodiment, the lithium cobalt oxide may have a particle diameter D50 of ≥ 5 µm to ≤ 25 µm, for example, 10 µm to 25 µm. Within this range, cell performance can be improved or optimized depending on a charge/discharge rate required for a device.

According to one example embodiment, the lithium cobalt oxide may be present in an amount of ≥ 90 wt% to ≤ 98 wt%, for example, 92 wt% to 97 wt%, in the positive electrode material layer. Within this range, the rechargeable lithium battery can be included for high voltage applications with a full charge voltage of 4.5 V or more.

The positive electrode material layer may further include a lithium manganese phosphate as the positive electrode material. For example, the positive electrode material layer may include ≥ 1 wt% to ≤ 5 wt% of the lithium manganese phosphate.

When the positive electrode material layer includes ≥ 1 wt% or more of the lithium manganese phosphate, thermal safety of cells can be improved by reducing or inhibiting self-heat generation upon thermal exposure of the positive electrode including the mixture of the lithium cobalt oxide and the lithium manganese phosphate. As used herein, "thermal exposure" may range from ≥ 130°C to ≤ 140°C without being limited thereto. When the lithium manganese phosphate is present in an amount of ≤ 5 wt% or less in the positive electrode material layer, the positive electrode material layer can reduce or prevent deterioration in cell capacity and minimize increase in cell resistance when applied to high voltage applications with a full charge voltage of 4.5 V or more. For example, the lithium manganese phosphate may be present in an amount of ≥ 2 wt% to ≤ 4 wt%, or 2 wt% to 3 wt%.

According to one example embodiment, the lithium manganese phosphate may be represented by Formula 2 below:

Li_{α}Mn_{1-β}M_{β}PO₄, Formula 2

In Formula 2, α and β satisfy: 0.95 ≤ α ≤ 1.05 and 0 ≤ β ≤ 0.20, and

M denotes or includes at least one metal or transition metal element with an oxidation number of +2 or +3 excluding manganese.

In one example embodiment, M may denote or include at least one of Al, Mg, Ni, Co, Fe, Cr, V, Ti, Cu, B, Ca, Zn, Zr, Nb, Mo, Sr, Sb, W, and Bi. For example, M may denote or include at least one element such as or including at least one of Ni, Fe, and Co. For example, M may or include denote Ni and Fe, or Ni and Co.

In one example embodiment, the lithium manganese phosphate may be coated with crystalline or amorphous carbon to improve electrical conductivity or ionic conductivity.

According to one example embodiment, the lithium manganese phosphate may be or include Li_{α}MnPO₄ (where α is as defined in Formula 2 above), for example, LiMnPO₄.

The lithium manganese phosphate may be prepared by a typical method known to those skilled in the art.

According to one example embodiment, the lithium manganese phosphate may have a smaller particle diameter D50 than the lithium cobalt oxide. As a result, the positive electrode can be operated at a full charge voltage of ≥ 4.5 V or more and can readily improve thermal safety. According to one example embodiment, the lithium manganese phosphate can readily surround the lithium cobalt oxide, thereby facilitating simultaneous or contemporaneous improvement in thermal safety and high energy density while improving an electrode composite density.

For example, the lithium manganese phosphate may have a particle diameter D50 of ≥ 0.2 µm to ≤ 5 µm, for example, 0.5 µm to 2 µm. The range of particle diameter D50 of the lithium manganese phosphate may be achieved by adjusting calcination conditions and the degree of milling in preparation of the lithium manganese phosphate.

According to one example embodiment, the mixture may include ≥ 90 wt% to ≤ 99 wt%, for example, 94 wt% to 99 wt%, of the lithium cobalt oxide and ≥ 1 wt% to ≤ 10 wt%, for example, 1 wt% to 6 wt%, of the lithium manganese phosphate. Within the above ranges, the effects of the present disclosure can be readily realized.

According to one example embodiment, the positive electrode may include ≥ 98 wt% or more, for example, 98 wt% to 100 wt%, for example, 100 wt%, of the mixture as the positive electrode material. Within this range, the positive electrode can be operated at a full charge voltage of ≥ 4.5 V or more and can readily improve thermal safety.

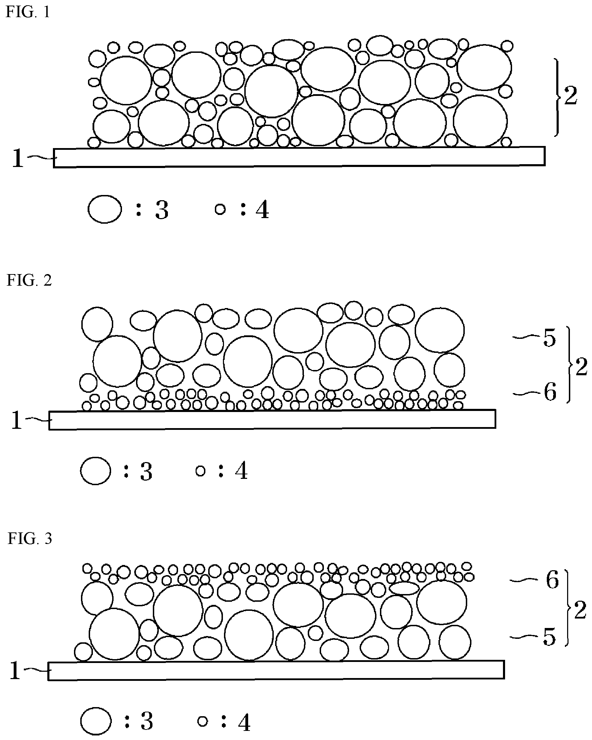

The mixture may be included in various forms in the positive electrode material layer. FIG. 1 to FIG. 3 are conceptual diagrams of positive electrodes according to various example embodiments of the present disclosure.

Referring to FIG. 1, a positive electrode may include a current collector 1 and a positive electrode material layer 2 formed on the current collector, in which a lithium cobalt oxide 3 and a lithium manganese phosphate 4 may be intermixed with each other in the positive electrode material layer 2. As used herein, "intermixed" indicates that the lithium cobalt oxide and the lithium manganese phosphate are not separated into distinct regions in the positive electrode material layer, but that particles of lithium cobalt oxide and particles of lithium manganese phosphate are mixed with each other to be adjacent each other. According to one example embodiment, the positive electrode material layer may be prepared from a composition for the positive electrode material layer prepared by directly mixing the lithium cobalt oxide with the lithium manganese phosphate.

According to one example embodiment, the lithium manganese phosphate 4 may be mixed with the lithium cobalt oxide 3 to surround the lithium cobalt oxide 3, as shown in FIG. 1. With this structure, the positive electrode can improve thermal safety while reducing resistance.

Referring to FIG. 2, a positive electrode includes a current collector 1 and a positive electrode material layer 2 formed on the current collector 1. The positive electrode material layer 2 may include a lithium cobalt oxide 3 and a lithium manganese phosphate 4, and may have a structure in which a layer 6 containing the lithium manganese phosphate 4, and a layer 5 containing the lithium cobalt oxide 3, are formed, e.g., sequentially formed, on the current collector 1. In an example, the positive electrode material layer 2 may be prepared by forming the lithium manganese phosphate-containing layer 4 on the current collector 1, followed by forming the lithium cobalt oxide-containing layer 3.

According to one example embodiment, the positive electrode material layer may include ≥ 85% to ≤ 98% of the lithium cobalt oxide-containing layer 3, and ≥ 2% to ≤ 15% of the lithium manganese phosphate-containing layer 4 with reference to thickness ratio.

Referring to FIG. 3, the positive electrode includes a current collector 1 and a positive electrode material layer 2 formed on the current collector 1, in which the positive electrode material layer 2 may include a lithium cobalt oxide 3 and a lithium manganese phosphate 4 and may have a structure in which a layer 5 containing the lithium cobalt oxide 3 and a layer 6 containing the lithium manganese phosphate 4 are formed, e.g., sequentially formed, on the current collector 1. The positive electrode material layer 2 may be prepared by forming the lithium manganese phosphate-containing layer 4 on the current collector 1, followed by forming the lithium cobalt oxide-containing layer 3.

According to one example embodiment, the positive electrode material layer may include ≥ 85% to ≤ 98% of the lithium cobalt oxide-containing layer 3, and ≥ 2% to ≤ 15% of the lithium manganese phosphate-containing layer 4 with reference to thickness ratio.

The positive electrode material may be present in an amount of ≥ 90 wt% to ≤ 99.5 wt% based on 100 wt% of the positive electrode material layer. Within this range, the positive electrode can be operated as a positive electrode.

The positive electrode material layer may further include a binder and/or a conductive material. In addition, the positive electrode material layer may further include an additive capable of acting as a sacrificial positive electrode.

Each of the binder and the conductive material may be present in an amount of ≥ 0.1 wt% to ≤ 5 wt%, for example, 0.5 wt% to 5 wt%, based on 100 wt% of the positive electrode material layer.

The binder is configured to attach positive electrode material particles to each other while attaching the positive electrode material to the current collector. The binder may include, for example, at least one of polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and the like, without being limited thereto.

The conductive material is configured to impart conductivity to the electrodes, and may be or include any electrically conductive material that does not cause chemical change in cells under construction. The conductive material may include, for example, carbon materials, such as at least one of natural graphite, artificial graphite, carbon black, acetylene black, Ketjen black, carbon fiber, carbon nanofibers, carbon nanotubes, and the like; metal-based materials in the form of metal powders or metal fibers containing at least one of copper, nickel, aluminum, silver, and the like; conductive polymers, such as polyphenylene derivatives and the like; and mixtures thereof.

The current collector may be or include Al, without being limited thereto.

The negative electrode includes a current collector and a negative electrode material layer disposed on the current collector. The negative electrode material layer includes a negative electrode material, and may further include a binder and/or a conductive material.

For example, the negative electrode material layer may include ≥ 90 wt% to ≤ 99 wt% of the negative electrode material, ≥ 0.5 wt% to ≤ 5 wt% of the binder, and ≥ 0 wt% to ≤ 5 wt% of the conductive material.

The negative electrode material includes at least one of a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based negative electrode material, for example, crystalline carbon, amorphous carbon, or a combination thereof. The crystalline carbon may include, for example, graphite, such as natural graphite or artificial graphite, in amorphous, plate, flake, substantially spherical, or fibrous form, and the amorphous carbon may include, for example, at least one of soft carbon, hard carbon, mesoporous pitch carbides, calcined coke, and the like.

As the lithium metal alloy, an alloy of lithium and a metal such as or including at least one of Na, K, Rb, Cs, Fr, Be, Mg, Ca, Sr, Si, Sb, Pb, In, Zn, Ba, Ra, Ge, Al and Sn may be included.

The material capable of being doped to lithium and de-doped therefrom may be or include an Si-based negative electrode material or an Sn-based negative electrode material. The Si-based negative electrode material may be or include at least one of silicon, a silicon-carbon composite, SiOₓ (0<x<2), Si-Q alloys (where Q is or includes at least one of alkali metals, alkali-earth metals, Group XIII elements, Group XIV elements (excluding Si), Group XV elements, Group XVI elements, transition metals, rare-earth elements, and combinations thereof), or a combination thereof. The Sn-based negative electrode material may be or include at least one of Sn, SnO₂, an Sn alloy, or a combination thereof.

The silicon-carbon composite may be or include a composite of silicon and amorphous carbon. According to one example embodiment, the silicon-carbon composite may be prepared in the form of silicon particles having an amorphous carbon coating formed on the surface thereof. For example, the silicon-carbon composite may include secondary particles (cores) composed of primary silicon particles, and an amorphous carbon coating layer (shell) formed on the surface of the secondary particles. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based negative electrode material or the Sn-based negative electrode material may be combined with the carbon-based negative electrode material.

According to one example embodiment, the negative electrode material may be or include crystalline carbon, for example, graphite, such as natural or artificial graphite, in amorphous, plate, flake, substantially spherical, or fibrous form, to facilitate realization of effects of cells to which the positive electrode material according to the present disclosure is applied.

The binder is configured to attach the negative electrode material particles to each other while attaching the negative electrode material to the current collector. The binder may be or include at least one of a non-aqueous binder, an aqueous binder, a dry binder, or a combination thereof.

The non-aqueous binder may be or include at least one of polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is included as the negative electrode binder, a cellulose-based compound capable of imparting viscosity may be further included. The cellulose-based compound may be or include a mixture of at least one of carboxymethylcellulose, hydroxypropyl methylcellulose, methylcellulose, or alkali metal salts thereof. The alkali metal may be or include at least one of Na, K, or Li.

The dry binder may be or include a fibrous polymeric material and may be or include, for example, at least one of polytetrafluoroethylene, polyvinylidene fluoride, a polyvinylidene fluoride-hexafluoropropylene copolymer, polyethylene oxide, or a combination thereof.

The conductive material is configured to impart conductivity to the electrodes, and may be or include any electrically conductive material that does not cause chemical change in cells under construction. For example, the conductive material may include, for example, carbon materials, such as or including at least one of natural graphite, artificial graphite, carbon black, acetylene black, Ketjen black, carbon fibers, carbon nanofibers, carbon nanotubes, and the like; metal-based materials in the form of metal powders or metal fibers containing at least one of copper, nickel, aluminum, silver, and the like; conductive polymers, such as polyphenylene derivatives and the like; or mixtures thereof.

The negative electrode current collector may be or include at least one of copper foil, nickel foil, stainless steel foil, titanium foil, nickel foam, copper foam, a conductive metal-coated polymer base, and combinations thereof.

The rechargeable lithium battery may further include an electrolyte for rechargeable lithium batteries.

The electrolyte for rechargeable lithium batteries includes a non-aqueous organic solvent and a lithium salt.

The non-aqueous organic solvent acts as a medium through which ions involved in electrochemical reaction of a cell can move.

The non-aqueous organic solvent may be or include at least one of a carbonate-based solvent, an ester-based solvent, an ether-based solvent, a ketone-based solvent, an alcohol-based solvent, a non-amphoteric solvent, or a combination thereof.

The carbonate-based solvents may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC).

The ester-based solvents may include at least one of methyl acetate, ethyl acetate, n-propyl acetate, dimethyl acetate, methyl propionate, ethyl propionate (EP), propyl propionate (PP), propyl butyrate (PB), decanolide, mevalonolactone, valerolactone, caprolactone, and the like.

The ether-based solvents may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include at least one of ethyl alcohol, isopropyl alcohol, and the like, and non-amphoteric solvent may include at least one of nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be included alone or as a mixture thereof.

In use of the carbonate-based solvent, a mixture of a cyclic carbonate and a chained carbonate may be used, and the cyclic carbonate and the chained carbonate may be mixed in a volume ratio of 1:1 to 1:9.

According to one example embodiment, the non-aqueous organic solvent may be or include a mixture of a carbonate-based solvent and an ester-based solvent. For example, the carbonate-based solvent and the ester-based solvent may be present in a volume ratio of 1:0.5 to 1:2. Within this range, the effects of the present disclosure can be readily realized. For example, the non-aqueous organic solvent may include at least one of ethyl carbonate (EC), propyl carbonate (PC), ethyl propionate (EP) or propyl propionate (PP) in a volume ratio of 1 to 3:1:1 to 6, for example, 1 to 2:1:2 to 4. Within these ranges, the effects of the present disclosure can be readily realized in application of the positive electrode material.

The lithium salt is a substance that is soluble in an organic solvent and may constitute a source of lithium ions in a battery, enabling operation of a basic rechargeable lithium battery while facilitating transfer of the lithium ions between the positive electrode and the negative electrode. The lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

Depending on the type of rechargeable lithium battery, a separator may be interposed between the positive electrode and the negative electrode. For such a separator, polyethylene, polypropylene, polyvinylidene fluoride, or at least two layers thereof, may be included as well as mixed layers, such as a polyethylene/polypropylene bilayer separator, a polyethylene/polypropylene/polyethylene trilayer separator, a polyethylene/polyethylene/polypropylene trilayer separator, and the like.

The separator may include a porous substrate and a coating layer that includes an organic material, an inorganic material, or a combination thereof on one or both surfaces of the porous substrate.

The porous substrate may be or include a polymer layer formed of or including a polymer such as or including at least one of polyolefins, such as polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, without being limited thereto.

The organic material and the inorganic material may be present in a mixed state in one coating layer, or may be present in the form of a stack structure of a coating layer including the organic material and a coating layer including the inorganic material.

Rechargeable lithium batteries may be classified into a cylindrical secondary battery, a faceted secondary battery, a pouch type secondary battery, a coin type secondary battery, and the like, based on the shapes thereof.

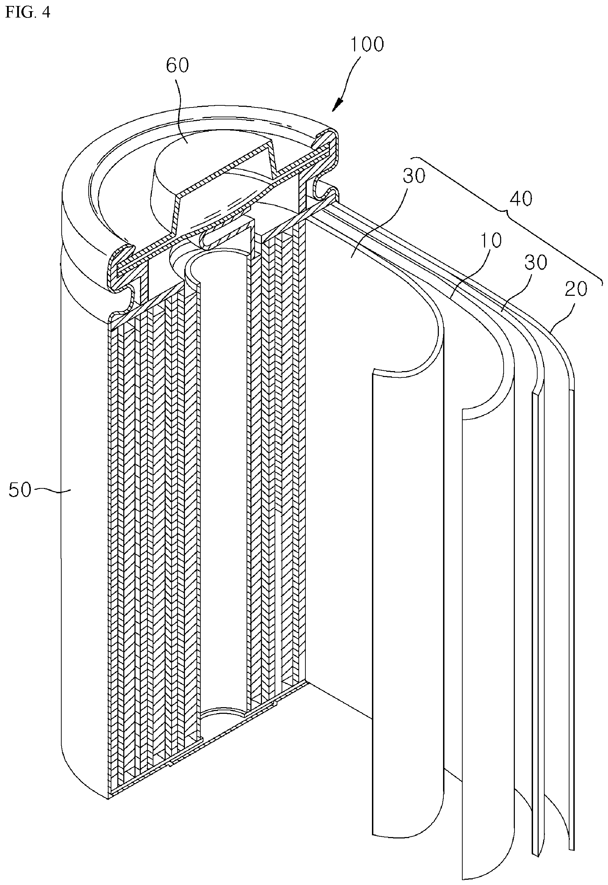

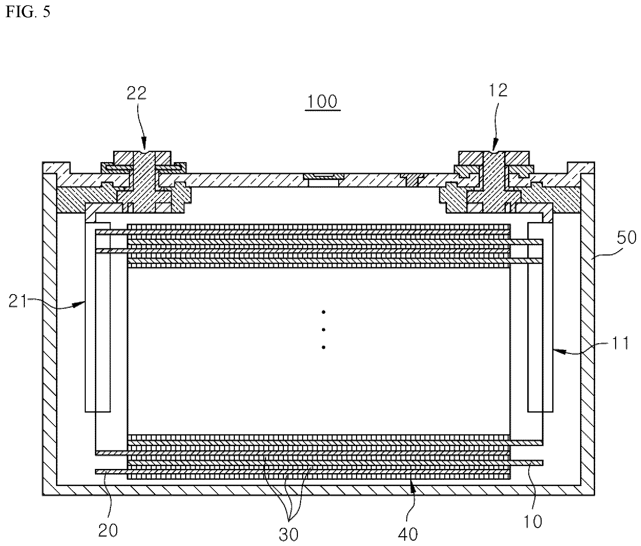

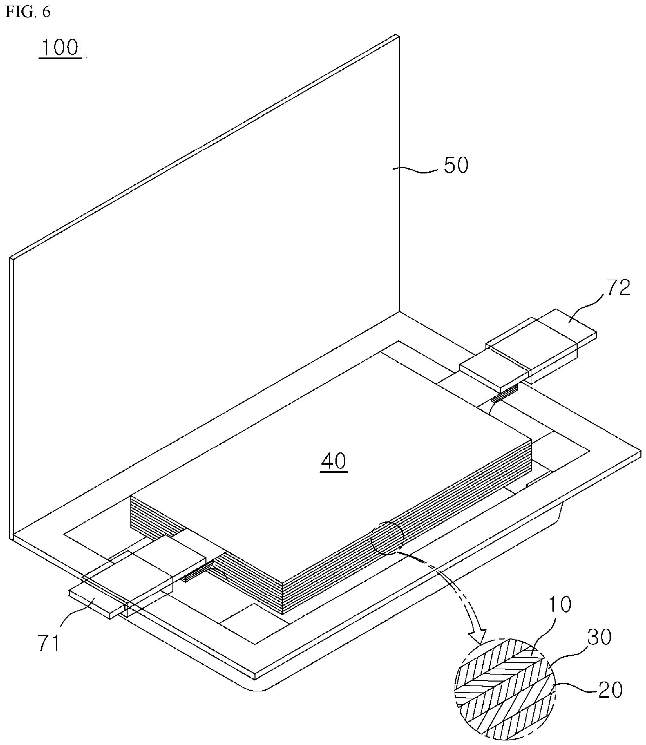

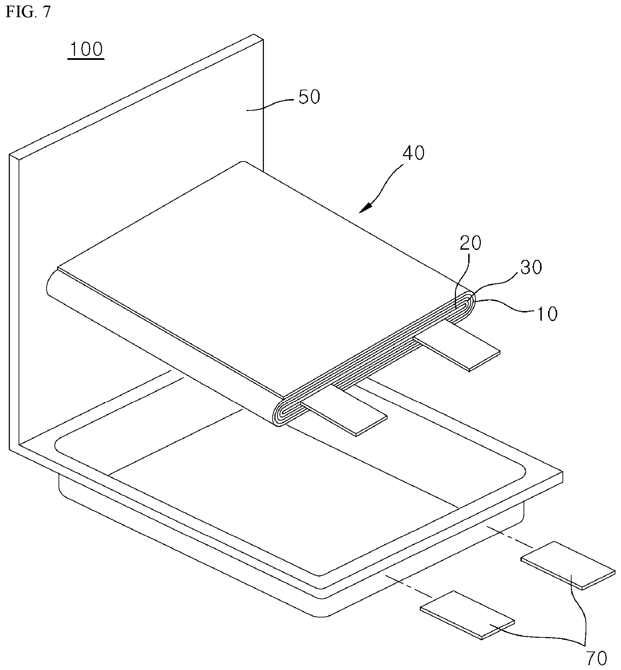

FIG. 4 to FIG. 7 are schematic views of rechargeable lithium batteries, according to example embodiments of the present disclosure, in which FIG. 4 illustrates a cylindrical rechargeable battery, FIG. 5 illustrates a prismatic rechargeable battery, and FIG. 6 and FIG. 7 illustrate pouch-type rechargeable batteries.

Referring to FIG. 4 to FIG. 7, a rechargeable lithium battery 100 may include an electrode assembly 40 in which a separator 30 is interposed between a positive electrode 10 and a negative electrode 20, and a case 50 that receives the electrode assembly 40 therein. The positive electrode 10, the negative electrode 20, and the separator 30 may be embedded in an electrolyte (not shown). The rechargeable lithium battery 100 may include a sealing member 60 that seals the case 50, as shown in FIG. 4. In addition, as shown in FIG. 5, the rechargeable lithium battery 100 may include a positive electrode lead tab 11, a positive electrode terminal 12, a negative electrode lead tab 21, and a negative electrode terminal 22. Referring to FIG. 6 and FIG. 7, the rechargeable lithium battery 100 may include electrode tabs 70 illustrated in FIG. 7, or a positive electrode tab 71 and a negative electrode tab 72 illustrated in FIG. 6, the electrode tabs 70/71/72 forming electrical pathways conducting current generated in the electrode assembly 40 to the outside.

Rechargeable lithium batteries according to example embodiments of the present disclosure may be applicable to, e.g., automobiles, mobile phones, and/or various other electrical devices, without being limited thereto.

Next, a method of manufacturing a rechargeable lithium battery according to one example embodiment is described.

An example manufacturing method includes forming a positive electrode material layer on a current collector, in which the positive electrode material layer includes a mixture of a lithium cobalt oxide and a lithium manganese phosphate as a positive electrode material, and the lithium manganese phosphate is present in an amount of ≥ 1 wt% to ≤ 5 wt% in the positive electrode material layer.

Because the positive electrode material layer, the lithium cobalt oxide, and the lithium manganese phosphate are substantially the same as the lithium cobalt oxide, and the lithium manganese phosphate described above, a detailed description thereof is omitted. By the manufacturing method, a rechargeable lithium battery for a full charge voltage of 4.5 V or more may be manufactured.

A positive electrode may be prepared by coating a composition for the positive electrode material layer on the current collector, followed by drying the composition. Herein, coating and drying may be performed by typical methods known to those skilled in the art. Detailed description of the positive electrode material layer is substantially the same as described above and is omitted herein.

Next, the present disclosure is described in more detail with reference to examples. However, it should be understood that these examples are provided for illustration only and should not be construed in any way as limiting the disclosure.

### Preparative Example 1: Preparation of LiCoO₂

Co₃O₄ and Li₂CO₃ were homogeneously mixed to a mole ratio of LiCoO₂, which in turn was calcined at 900°C under an oxygen atmosphere for 24 hours, and was then slowly cooled to prepare LiCoO₂ (particle diameter D50: 15 µm).

### Preparative Example 2: Preparation of LiMnPO₄

Mn(NO₃)₂·4H₂O as a manganese compound and (NH₄)₂HPO₄ as a phosphoric acid compound were weighed to have a mole ratio of 1:1 ([Mn] : [P]) and were placed in pure water as a solvent to prepare a mixed solution, and aqueous ammonia was added to the mixed solution, which in turn was stirred at 70°C and washed, thereby preparing a manganese phosphate hydrate. The washed manganese phosphate hydrate was dried in an oven at 90°C to synthesize manganese phosphate (MnPO₄). The manganese phosphate was mixed with lithium hydroxide (LiOH) as a lithium source to prepare a mixture having a mole ratio of 1:1:1 ([Li]:[Mn]:[P]), and pure water was added as a solvent to the mixture to prepare a slurry, which in turn was spray dried (at 230°C). The dried particles were subjected to heat treatment at 450°C for 12 hours under a reducing atmosphere (H₂ with 3% nitrogen). The heat-treated LiMnPO₄ powder was ball milled and included as an active material (particle diameter D50: 1 µm).

### Example 1

A positive electrode was prepared by mixing 94 wt% of LiCoO₂ (particle diameter D50: 15 µm) as a positive electrode material, 3 wt% of LiMnPO₄ (particle diameter D50: 1 µm), 1.5 wt% of Ketjen black as a conductive material, and 1.5 wt% of polyvinylidene fluoride (PVdF) as a binder, followed by coating and drying the mixture on aluminum foil. A pouch cell was prepared using the positive electrode, a negative electrode containing graphite as negative electrode material, and a solution of 1.3 M LiPF₆ dissolved in a mixture of EC/PC/EP (3:2:5 by volume, volume ratio 1.5:1:2.5) as an electrolyte.

### Example 2

A positive electrode was prepared by mixing 96 wt% of LiCoO₂ as a positive electrode material, 1 wt% of LiMnPO₄, 1 wt% of Ketjen black as a conductive material, and 1.5 wt% of polyvinylidene fluoride as a binder, followed by coating and drying the mixture on aluminum foil. A cell was prepared in the same manner as in Example 1.

### Example 3

A positive electrode was prepared by mixing 95 wt% of LiCoO₂ as a positive electrode material, 2 wt% of LiMnPO₄, 1.5 wt% of Ketjen black as a conductive material, and 1.5 wt% of polyvinylidene fluoride as a binder, followed by coating and drying the mixture on aluminum foil. A cell was prepared in the same manner as in Example 1.

### Example 4

A positive electrode was prepared by mixing 92 wt% of LiCoO₂ as a positive electrode material, 5 wt% of LiMnPO₄, 1.5 wt% of Ketjen black as a conductive material, and 1.5 wt% of polyvinylidene fluoride as a binder, followed by coating and drying the mixture on aluminum foil. A cell was prepared in the same manner as in Example 1.

### Example 5

Referring to Example 1, a final electrode was prepared by coating and drying a LiMnPO₄ positive electrode slurry on aluminum foil to form a LiMnPO₄ layer, followed by coating and drying an LiCoO₂ positive electrode slurry thereon. Each of the slurries contained a mixture of Ketjen black as a conductive material and polyvinylidene fluoride as a binder. A positive electrode material layer was composed of a layer containing LiMnPO₄, Ketjen black and polyvinylidene fluoride, and a layer containing LiCoO₂, Ketjen black and polyvinylidene fluoride, in which LiCoO₂ was present in an amount of 94 wt% and LiMnPO₄ was present in an amount of 3 wt%.

### Example 6

Referring to Example 1, a layer containing LiCoO₂, Ketjen black and polyvinylidene fluoride was prepared by mixing LiCoO₂ as a positive electrode material, Ketjen black as a conductive material, and polyvinylidene fluoride as a binder, followed by coating and drying the mixture on aluminum foil. A positive electrode including a positive electrode material layer was prepared by coating and drying a LiMnPO₄ positive electrode slurry (containing LiMnPO₄ as a positive electrode material, Ketjen black as a conductor, and polyvinylidene fluoride as a binder) on the layer to form a LiMnPO₄ layer. The positive electrode material layer was composed of the LiMnPO₄ layer and the LiCoO₂ layer, in which LiCoO₂ was present in an amount of 94 wt% and LiMnPO₄ was present in an amount of 3 wt%.

### Comparative Example 1

A positive electrode was prepared by mixing 97 wt% of LiCoO₂ as a positive electrode material, 1.5 wt% of Ketjen black as a conductive material, and 1.5 wt% of polyvinylidene fluoride (PVdF) as a binder, followed by coating and drying the mixture on aluminum foil. A cell was prepared in the same manner as in Example 1.

### Comparative Example 2

A positive electrode was prepared by mixing 94 wt% of LiCoO₂ as a positive electrode material, 3 wt% of lithium iron phosphate (LiFePO₄), 1.5 wt% of Ketjen black as a conductive material, and 1.5 wt% of polyvinylidene fluoride (PVdF) as a binder, followed by coating and drying the mixture on aluminum foil. A cell was prepared in the same manner as in Example 1.

### Comparative Example 3

A positive electrode was prepared by mixing 96.5 wt% of LiCoO₂ as a positive electrode material, 0.5 wt% of LiMnPO₄, 1.5 wt% of Ketjen black as a conductive material, and 1.5 wt% of polyvinylidene fluoride as a binder, followed by coating and drying the mixture on aluminum foil. A cell was prepared in the same manner as in Example 1.

### Comparative Example 4

A positive electrode was prepared by mixing 90 wt% of LiCoO₂ as a positive electrode material, 7 wt% of LiMnPO₄, 1.5 wt% of Ketjen black as a conductive material, and 1.5 wt% of polyvinylidene fluoride as a binder, followed by coating and drying the mixture on aluminum foil. A pouch cell was prepared in the same manner as in Example 1.

### Electrode composite density (unit: g/cc)

A positive electrode material layer was cut into a specimen having a certain size to calculate an electrode composite density based on the volume and weight of the cut specimen.

### Discharge capacity (unit: mAh)

Discharge capacity of each cell prepared in Examples and Comparative Examples was measured through single charge/discharge by charging the cell at room temperature and at constant current/voltage under 0.2 C, 4.5 V and 0.05 C cut-off conditions, leaving the cell for 10 min, discharging the cell at a constant current of 0.2 C under a 2.75 V cut-off condition, and leaving the cell for 10 min.

### Direct current internal resistance (DC-IR) (unit: mΩ)

A pouch cell prepared in each of Examples and Comparative Examples was charged and discharged once by charging the cell at room temperature and at constant current/voltage under 0.2 C, 4.5 V and 0.05 C cut-off conditions, leaving the cell for 10 min, discharging the cell at a constant current of 0.2 C under a 2.75 V cut-off condition, and leaving the cell for 10 min, and direct current internal resistance (DC-IR) was measured through measurement of voltage drop (V) generated by applying a current to the cell at 1 C for 10 seconds at SoC10 (meaning that the cell is charged to 10% charge capacity at 100% full charge capacity and is 90% discharged in an under-discharge state).

**Table 1**

| | Example 1 | Example 5 | Example 6 |
|---|---|---|---|
| Electrode composite density (g/cc) | 4.15 | 4.02 | 4.03 |
| Discharge capacity (mAh) | 5,070 | 5,042 | 5,057 |
| DC-IR (mΩ) | 43.6 | 47.8 | 44.2 |

As shown in Table 1, the positive electrode material layers prepared by directly mixing the lithium cobalt oxide with the lithium manganese phosphate as in Example 1 had high discharge capacity and low resistance.

### Heating Test

A pouch cell with a graphite negative electrode as a counter electrode to the positive electrode prepared in each of Examples and Comparative Examples was manufactured and subjected to a heating test as a representative safety evaluation test item. The cells used in the heating test were charged at room temperature and at constant current/voltage under 0.2 C, 4.5 V and 0.05 C cut-off conditions, rested for 10 min, discharged at a constant current of 0.2 C under a 2.75 V cut-off condition, and rested for 10 min. Then, cells for 4.3V charge were recharged under 0.2 C, 4.3 V, and 0.05 C cut-off conditions and cells for 4.5 V charge were recharged under 0.2 C, 4.5 V, and 0.05 C cut-off conditions.

A heating chamber was heated at 5°C/min from room temperature to final holding temperatures of 130°C, 135°C, and 140°C and left at each final holding temperature for 1 hour to evaluate cell ignition. Ignition was evaluated by the number of ignited cells among five cells. A smaller number of ignited cells indicates better thermal safety.

**Table 2**

| | Heating @130°C | | Heating @135°C | | Heating @140°C | |
|---|---|---|---|---|---|---|
| | Comparative Example 1 | Example 4 | Comparative Example 1 | Example 4 | Comparative Example 1 | Example 4 |
| Charge to 4.3 V | 0 | 0 | 0 | 0 | 0 | 0 |
| Charge to 4.5 V | 0 | 0 | 2 | 0 | 5 | 0 |

As shown in Table 2, in a 4.3 V charge state, there is no difference in thermal characteristics between Comparative Examples and Examples under all heating temperature conditions of 130°C, 135°C, and 140°C. However, the cells of Examples have higher thermal safety (135°C, 140°C) even in a 4.5 V charge state than the lithium secondary cell of Comparative Example 1.

### Direct current internal resistance (DC-IR) (unit: mΩ)

A pouch cell prepared in each of Examples and Comparative Examples was charged and discharged once by charging the cell at room temperature and at constant current/voltage under 0.2 C, 4.5 V and 0.05 C cut-off conditions, leaving the cell for 10 min, discharging the cell at a constant current of 0.2 C under a 2.75 V cut-off condition, and leaving the cell for 10 min, and direct current internal resistance (DC-IR) was measured through measurement of voltage drop (V) generated by applying a current to the cell at 1 C for 10 seconds at SoC10 (meaning that the cell is charged to 10% charge capacity at 100% full charge capacity and is 90% discharged in an under-discharge state).

### Heating Test

A pouch cell with a graphite negative electrode as a counter electrode to the positive electrode prepared in each of Examples and Comparative Examples was manufactured and subjected to a heating test as a representative safety evaluation test item. The cells used in the heating test were charged at room temperature and at constant current/voltage under 0.2 C, 4.5 V and 0.05 C cut-off conditions, rested for 10 min, discharged at a constant current of 0.2 C under a 2.75 V cut-off condition, and rested for 10 min. Then, cells for 4.5V charge were recharged under 0.2 C, 4.5 V, and 0.05 C cut-off conditions and cells for 4.6 V charge were recharged under 0.2 C, 4.6 V, and 0.05 C cut-off conditions.

A heating chamber was heated at 5°C/min from room temperature to a final holding temperature of 140°C and was left at the final holding temperature for 1 hour to evaluate cell ignition. Ignition was evaluated by the number of ignited cells among five cells. A smaller number of ignited cells indicates better thermal safety.

**Table 3**

| | Comparative Example 1 | Comparative Example 3 | Example 2 | Example 1 | Example 3 | Example 4 | Comparative Example 4 |
|---|---|---|---|---|---|---|---|
| DC-IR (mΩ) | 42.1 | 42.3 | 42.5 | 43.6 | 43.2 | 45.4 | 52.3 |
| 4.5 V charge/heating @ 140°C | 5 | 2 | 0 | 0 | 0 | 0 | 0 |
| 4.6 V charge/heating @ 140°C | 5 | 4 | 1 | 0 | 0 | 0 | 0 |

As shown in Table 3, the cells (Examples 1, 2, 3, and 4) including 1 wt% to 5 wt% of the positive electrode material layer of lithium manganese phosphate exhibited good thermal safety at similar levels of cell resistance (DC-IR) in the 4.5 V charge/140°C heating test. The cell of Comparative Example 4 exhibited significant increase in cell resistance (DC-IR). In more severe conditions of the 4.6V charge/140°C heating test, one cell among 5 cells including 1% of the positive electrode material layer of lithium manganese phosphate (Example 2) ignited.

The above experimental results indicate that cells containing 2 wt% or more of the positive electrode material of the lithium manganese phosphate are more advantageous in terms of thermal safety under high voltage (4.6 V) conditions and cells containing 3 wt% or less of the positive electrode material of the lithium manganese phosphate exhibit lower resistance. Therefore, cells containing 2 wt% to 3 wt% of the positive electrode material of the lithium manganese phosphate are more advantageous.

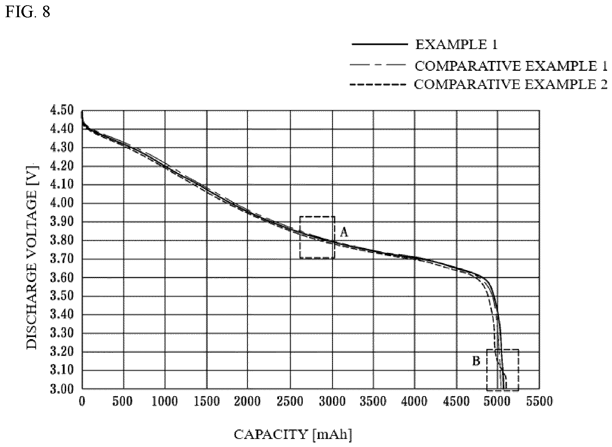

A cell with a cell capacity of 5 Ah prepared in each of Examples and Comparative Examples was charged and discharged once by charging the cell at room temperature and at constant current/voltage under 0.2 C, 4.5 V and 0.05 C cut-off conditions, leaving the cell for 10 min, discharging the cell at a constant current of 0.2 C under a 2.75 V cut-off condition, and leaving the cell for 10 min. Capacity-dependent discharge voltage curves of FIGS. 8 to 10 were obtained.

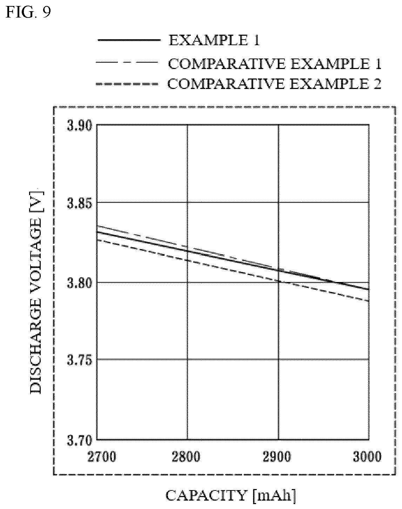

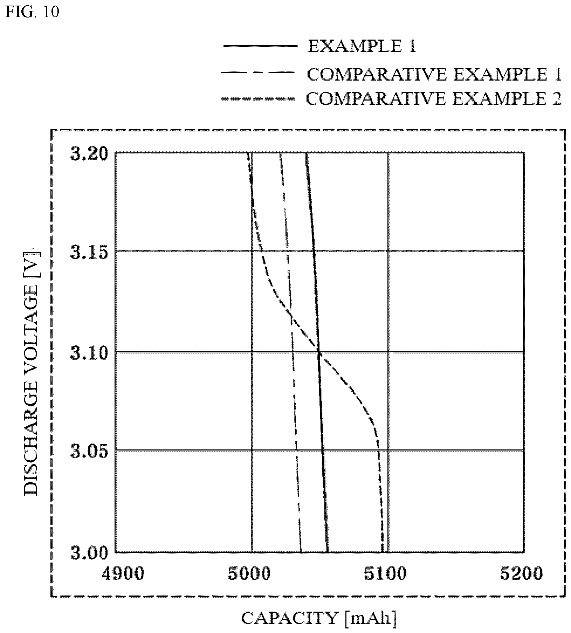

FIG. 8 is a graph depicting capacity-dependent discharge voltage curves in operation of the cells prepared in Examples and Comparative Examples, FIG. 9 is an enlarged view of region A (3.8 V discharge voltage region) of FIG 8, and FIG. 10 is an enlarged view of region B (3.2 V discharge voltage region) of FIG. 8.

Referring to FIG. 8 and FIG. 9, a positive electrode material layer further containing 3 wt% of a lithium manganese phosphate can exhibit capacity in a 3.8 V discharge voltage region on the discharge voltage curve, which is similar to an average voltage of a positive electrode material layer containing a lithium cobalt oxide alone, thereby providing higher capacity utilization in practical devices. On the other hand, referring to FIG. 8 and FIG. 10, the positive electrode material layer containing 3 wt% of the lithium iron phosphate exhibits capacity at 3.2 V or less on the discharge voltage curve, which limits capacity utilization in practical devices.

Although the present disclosure has been described with reference to some example embodiments and drawings, it should be understood that the present disclosure is not limited thereto and various modifications, changes, alterations, and equivalent example embodiments can be made by those skilled in the art without departing from the spirit and scope of the present disclosure.

## Claims

1. A rechargeable lithium battery (100) for a full charge voltage of 4.5 V or more, the rechargeable lithium battery (100) comprising:
a positive electrode (10) and a negative electrode (20) opposite the positive electrode (10), the positive electrode (10) comprising a current collector (1) and a positive electrode material layer (2) on at least one surface of the current collector (1),
wherein the positive electrode material layer (2) comprises a positive electrode material containing a mixture of a lithium cobalt oxide and a lithium manganese phosphate,
the lithium manganese phosphate being present in an amount of ≥ 1 wt% to ≤ 5 wt% in the positive electrode material layer (2).

2. The rechargeable lithium battery (100) as claimed in claim 1, wherein the lithium cobalt oxide is represented by Formula 1:
Li_{α}Co_{1-β}M_{β}O₂,
where α and β satisfy: 0.9 ≤ α ≤ 1.2 and 0 ≤ β <_ 0.1, and
M comprises at least one metal or transition metal element with an oxidation number of +2 or +3 excluding cobalt.

3. The rechargeable lithium battery (100) as claimed in claim 1 or 2, wherein the lithium manganese phosphate is represented by Formula 2:
Li_{α}Mn_{1-β}M_{β}PO₄,
where α and β satisfy: 0.95 ≤ α ≤ 1.05 and 0 ≤ β ≤ 0.20, and
M comprises at least one metal or transition metal element with an oxidation number of +2 or +3 excluding manganese.

4. The rechargeable lithium battery (100) as claimed in any of claims 1 to 3, wherein the lithium cobalt oxide comprises LiCoO₂, and the lithium manganese phosphate comprises LiMnPO₄.

5. The rechargeable lithium battery (100) as claimed in any of claims 1 to 4, wherein the lithium cobalt oxide is present in an amount of ≥ 90 wt% to ≤ 98 wt% in the positive electrode material layer (2).

6. The rechargeable lithium battery (100) as claimed in any of claims 1 to 5, wherein the lithium manganese phosphate has a smaller particle diameter D50 than the lithium cobalt oxide.

7. The rechargeable lithium battery (100) as claimed in any of claims 1 to 6, wherein the lithium manganese phosphate has a particle diameter D50 of ≥ 0.2 µm to ≤ 5 µm.

8. The rechargeable lithium battery (100) as claimed in any of claims 1 to 7, wherein the lithium manganese phosphate surrounds the lithium cobalt oxide.

9. The rechargeable lithium battery (100) as claimed in any of claims 1 to 8, wherein the lithium cobalt oxide and the lithium manganese phosphate are intermixed with each other in the positive electrode material layer (2).

10. The rechargeable lithium battery (100) as claimed in any of claims 1 to 9, wherein the positive electrode material layer (2) comprises a lithium manganese phosphate-containing layer (4) and a lithium cobalt oxide-containing layer (3) sequentially formed on the current collector (1).

11. The rechargeable lithium battery (100) as claimed in any of claims 1 to 10, wherein the positive electrode material layer (2) comprises a lithium cobalt oxide-containing layer (3) and a lithium manganese phosphate-containing layer (4) sequentially formed on the current collector (1).

12. The rechargeable lithium battery (100) as claimed in any of claims 1 to 11, wherein the mixture is present in an amount of ≥ 98 wt% or more in the positive electrode material.

13. The rechargeable lithium battery (100) as claimed in any of claims 1 to 12, wherein the negative electrode (20) comprises crystalline carbon.

14. The rechargeable lithium battery (100) as claimed in any of claims 1 to 13, further comprising:
a mixture of a carbonate-based solvent and an ester-based solvent mixed in a volume ratio of 1:0.5 to 1:2 as an electrolyte.

15. The rechargeable lithium battery (100) as claimed in any of claims 1 to 14, wherein the rechargeable lithium battery (100) is a pouch cell type battery.
